(19) Europäisches Patentamt / European Patent Office / Office européen des brevets

(11) **EP 1 998 190 A2**

(12) **EUROPEAN PATENT APPLICATION**

(43) Date of publication:
**03.12.2008 Bulletin 2008/49**

(51) Int Cl.:
***G02B 1/11*** *(2006.01)*

(21) Application number: **08156720.8**

(22) Date of filing: **22.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.05.2007 KR 20070051542**

(71) Applicant: **Samsung SDI Co., Ltd.**
**Suwon-si, Gyeonggi-do (KR)**

(72) Inventors:
• **Hwang, Cha-Won,**
**c/o Legal IP Team,**
**Samsung SDI Co.,Ltd**
**Gyeonggi-do (KR)**

• **Lee Sang-Mi,**
**c/o Legal IP Team,**
**Samsung SDI Co.,Ltd**
**Gyeonggi-do (KR)**
• **Kim Ji-Suk,**
**c/o Legal IP Team,**
**Samsung SDI Co.,Ltd**
**Gyeonggi-do (KR)**

(74) Representative: **Walaski, Jan Filip et al**
**Venner Shipley LLP**
**20 Little Britain**
**London EC1A 7DH (GB)**

(54) **Optical filter, plasma display device including the optical filter, and method of forming the optical filter**

(57) An optical filter includes a base film and at least two conductive layers stacked on the base film, a first conductive layer of the two conductive layers having a first thickness and a first refractive index, and a second conductive layer of the two conductive layers having a second thickness and a second refractive index, the first and second refractive indices and the first and second thicknesses being configured to generate a destructive interference of external light reflected from the first and second conductive layers.

FIG. 4

EP 1 998 190 A2

**Description**

The present invention relates to an optical filter and a plasma display device including the same. More particularly, embodiments of the present invention relate to an optical filter including a conductive film operating as an external light anti-reflection layer and a plasma display device including the same.

Plasma display devices may refer to display devices displaying images by applying a discharge voltage to a discharge gas between two substrates via electrodes. The applied voltage may trigger generation of ultraviolet (UV) light between the substrates to excite phosphors to emit visible light.

The conventional plasma display device may include an optical filter to improve the displayed image quality. For example, the conventional optical filter may block electromagnetic waves that may be harmful to human beings, near-infrared light that may cause erroneous operation of wireless phones or remote controls, and/or neon light-emission that may affect colour display. In addition, the conventional optical filter may prevent reflection of external light from a front surface of a plasma display panel (PDP) of the plasma display device.

The conventional optical filter may be formed of multiple layers, and may be installed on the front surface of the PDP. The conventional multiple layers of the optical filter may include a conductive layer for shielding electromagnetic waves and a separate, e.g., non-conductive, anti-reflection layer for minimizing reflection of external light from the PDP. Such a structure, however, may be complicated, and may require a complex and costly fabrication process. In addition, the anti-reflection layer may be configured as the outermost layer on the PDP, i.e., the conductive layer may be between the PDP and the anti-reflection layer, so grounding of a front surface of the conductive layer may be difficult.

Embodiments of the present invention are therefore directed to an optical filter and a plasma display device including the same, which substantially overcome one or more of the disadvantages and shortcomings of the related art.

It is therefore a feature of an embodiment of the present invention to provide an optical filter including a conductive layer operating as an external light anti-reflection layer.

It is therefore another feature of an embodiment of the present invention to provide a plasma display device with an optical filter including a conductive layer operating as an external light anti-reflection layer.

At least one of the above and other features and advantages of the present invention may be realized by providing an optical filter, including a base film, and a plurality of conductive layers stacked on the base film, a first conductive layer of two conductive layers among the conductive layers having a first thickness and a first refractive index and a second conductive layer of the two conductive layers having a second thickness and a second refractive index, the first and second refractive indices and the first and second thicknesses being configured to generate a destructive interference of external light reflected from the first and second conductive layers.

The base film may include one or more of polyethersulphone (PES), polyacrylate (PAR), polyetherimide (PEI), polyethylenenapthalate (PEN), polyethyleneterepthalate (PET), polyphenylene sulfide (PPS), polyallylate, polyimide, polycarbonate (PC), cellulose triacetate (TAC), and/or cellulose acetate propionate (CAP). The optical filter may further include an adhesive layer, the base film being between the adhesive layer and the stacked conductive layers. The adhesive layer may include one or more of an acrylic-based resin, a polyester resin, an epoxy resin, a urethane resin, and/or a pressure sensitive adhesive (PSA). The adhesive layer may include a pigment and/or a dye. The optical filter may have a light transmittance of about 20% to about 90 % with respect to the external light, and a haze of about 1% to about 15%. Each of the first and second thicknesses may be related to the first and second refractive indices, respectively, according to the following relationship,

$$d = \frac{\lambda}{4n}$$

wherein d denotes a thickness of a conductive layer, n denotes a refractive index of the conductive layer, and $\lambda$ denotes a wavelength of the visible ray.

At least one of the above and other features and advantages of the present invention may be also realized by providing a plasma display device, including a plasma display panel, an optical filter on the plasma display panel, the filter including a base film and a plurality of conductive layers stacked on the base film, a first conductive layer of two conductive layers among the conductive layers having a first thickness and a first refractive index and a second conductive layer of the two conductive layers having a second thickness and a second refractive index, the first and second refractive indices and the first and second thicknesses being configured to generate a destructive interference of external light reflected from the first and second conductive layers, a grounding member electrically connected to at least one conductive layer of the optical filter, a driving apparatus configured to drive the plasma display panel, and a chassis between the plasma display panel and the driving apparatus.

The base film may include one or more of polyethersulphone (PES), polyacrylate (PAR), polyetherimide (PEI), polyethyelenen napthalate (PEN), polyethyeleneterepthalate (PET), polyphenylene sulfide (PPS), polyallylate, polyimide, polycarbonate (PC), cellulose triacetate (TAC), and/or cellulose acetate propinonate (CAP). The plasma display device may further include an adhesive layer between the optical filter and the plasma display panel. The adhesive layer may include one or more of an acrylic-based resin, a polyester resin, an epoxy resin, a urethane resin, and/or a pressure sensitive adhesive (PSA). The adhesive layer may include a pigment and/or a dye. The optical filter may have a light transmittance of about 20% to about 90 % with respect to the external light, and a haze of about 1% to about 15%. Each of the first and second thicknesses of the conductive layers in the optical filter may be related to the first and second refractive indices, respectively, according to the following relationship,

$$d = \frac{\lambda}{4n}$$

wherein d denotes a thickness of a conductive layer, n denotes a refractive index of the conductive layer is n, and $\lambda$ denotes a wavelength of the visible ray.

At least one of the above and other features and advantages of the present invention may be also realized by providing a method of forming an optical filter, including forming a base film, and forming a plurality of conductive layers sequentially on the base film, such that a first conductive layer of two conductive layers among the conductive layers has a first thickness and a first refractive index and a second conductive layer of the two conductive layers has a second thickness and a second refractive index, the first and second refractive indices and the first and second thicknesses being selected to generate a destructive interference of external light reflected from the first and second conductive layers.

The above and other features and advantages of the present invention will become more apparent to those of ordinary skill in the art by describing in detail exemplary embodiments thereof with reference to the attached drawings, in which:

FIG. 1 illustrates an exploded perspective view of a plasma display device according to an embodiment of the present invention;
FIG. 2 illustrates an enlarged cross-sectional view of an optical filter in the plasma display device of FIG. 1;
FIG. 3 illustrates an enlarged view of portion S in FIG. 2; and
FIG. 4 illustrates a ray diagram of light incident on an optical filter according to an embodiment of the present invention.

Embodiments of the present invention will now be described more fully hereinafter with reference to the accompanying drawings, in which exemplary embodiments of the invention are illustrated. Aspects of the invention may, however, be embodied in different forms and should not be construed as limited to the embodiments set forth herein. Rather, these embodiments are provided so that this disclosure will be thorough and complete, and will fully convey the scope of the invention to those skilled in the art.

In the figures, the dimensions of layers, elements, and regions may be exaggerated for clarity of illustration. It will also be understood that when a layer or element is referred to as being "on" another layer, element, or substrate, it can be directly on the other layer, element, or substrate, or intervening layers and/or elements may also be present. Further, it will be understood that the term "on" can indicate solely a vertical arrangement of one element or layer with respect to another element or layer, or may not indicate a vertical orientation, e.g., a horizontal orientation. In addition, it will also be understood that when a layer or element is referred to as being "between" two layers or elements, it can be the only layer or element between the two layers or elements, or one or more intervening layers and/or elements may also be present. Like reference numerals refer to like elements throughout.

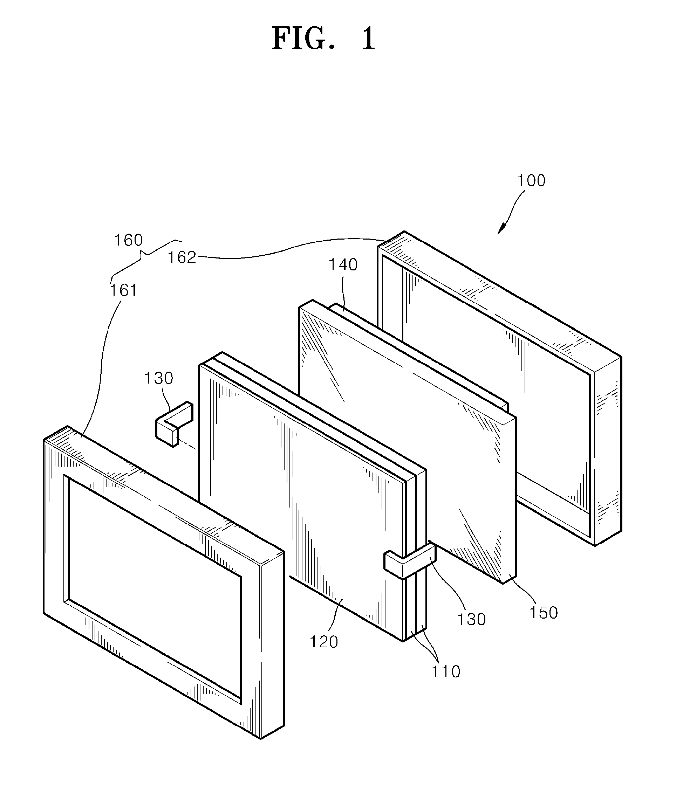

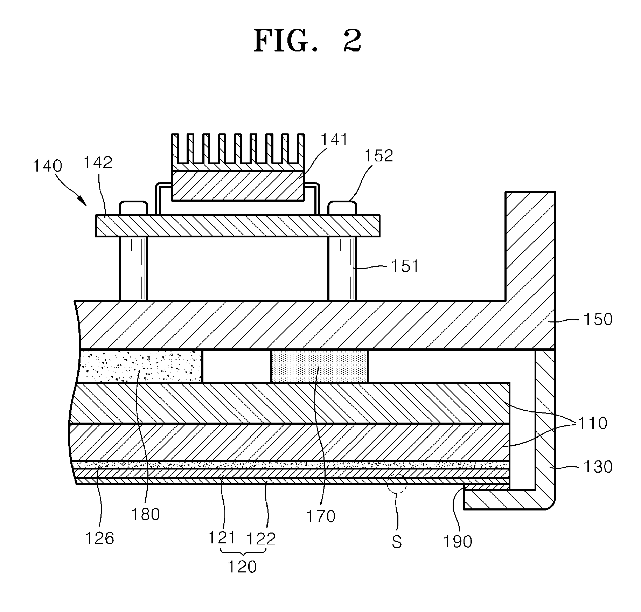

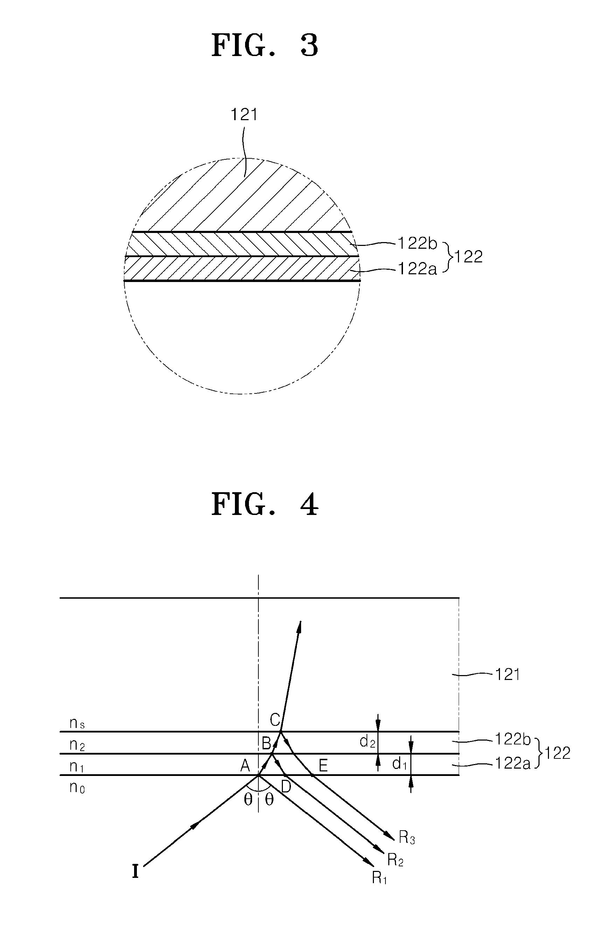

FIG. 1 illustrates an exploded perspective view of a plasma display device according to an embodiment of the present invention, FIG. 2 illustrates an enlarged cross-sectional view of an optical filter in the plasma display device of FIG. 1, and FIG. 3 illustrates an enlarged view of portion S in FIG. 2.

As illustrated in FIGS. 1-3, a plasma display device 100 may include a PDP 110, an optical filter 120, a grounding member 130, a driving apparatus 140, a chassis 150, and a case 160.

The PDP 110 may include front and rear panels, and may be installed on a front surface of the chassis 150. In particular, the PDP 110 and the chassis 150 may be coupled to each other using a dual-adhesive unit 170. For example, as illustrated in FIG. 2, the dual-adhesive unit 170 may be attached between a rear surface of the rear panel of the PDP 110 and the front surface of the chassis 150. The dual-adhesive unit 170 may be, e.g., a dual-adhesive tape. The chassis 150 may be formed of a conductive material, e.g., aluminium, a non-conductive material, e.g., plastic, or a combination thereof, e.g., predetermined portions of the chassis 150 may be formed of a conductive material to facilitate grounding of the grounding member 130.

As further illustrated in FIG. 2, a panel heat dissipation sheet 180 having high thermal conductivity may be disposed between the PDP 110 and the chassis 150, so the panel heat dissipation sheet 180 may dissipate heat generated during operation of the PDP 110 to the chassis 150. The panel heat dissipation sheet 180 may be in direct contact with both the PDP 110 and the chassis 150. However, other configurations of the panel heat dissipation sheet 180 are within the scope of the present invention, e.g., the panel heat dissipation sheet 180 may be thin and may be in direct contact with only the PDP 110.

The optical filter 120 of the plasma display device 100 may be formed on a front surface of the PDP 110, i.e., on a front surface of the front panel of the PDP 110. The optical filter 120 may have a light transmittance of about 20% to about 90% and a haze of about 1% to about 15%. The optical filter 120 may include a base film 121 and a conductive film 122. The base film 121 of the optical filter 120 may be attached to the PDP 110 via an adhesive layer 126, as further illustrated in FIG. 2, and the conductive film 122 may be attached to the base film 121, i.e., the base film 121 may be between the PDP 110 and the conductive film 122.

The base film 121 may be used as a base of the optical filter 120, and may be formed of, e.g., one or more of polyethersulphone (PES), polyacrylate (PAR), polyetherimide (PEI), polyethylenenapthalate (PEN), polyethyleneterepthalate (PET), polyphenylene sulfide (PPS), polyallylate, polyimide, polycarbonate (PC), cellulose triacetate (TAC), and/or cellulose acetate propionate (CAP). For example, the base film 121 may be formed of PC, PET, TAC, or PEN. The conductive film 122 of the filter 120 may include a first conductive layer 122a and a second conductive layer 122b. The first and second conductive layers 122a and 122b may be thin layers having high light transmittance, as will be discussed in more detail below with reference to FIG. 3.

The adhesive layer 126 of the filter 120 may include, e.g., a thermosetting resin or a UV-curable resin having high light transmittance, and may be applied between the base film 121 and the PDP 110. Examples of materials used to form the adhesive layer 126 may include one or more of an acrylic-based resin, a polyester resin, an epoxy resin, a urethane resin, and/or a pressure sensitive adhesive (PSA). A refractive index of the adhesive layer 126 may be different from a refractive index of the PDP 110 by about 1% or less in order to prevent or substantially minimize generation of a dual imaging phenomenon. In addition, a pigment and/or a dye may be added to the adhesive layer 126 to adjust color display and/or to block neon light. The pigment and/or the dye may be dispersed in the adhesive layer 126 as particles. Any suitable dyes and/or pigments may be used, e.g., one or more of a cyanine-based compound, an azomethine-based compound, an oxonol-based compound, or an azo-based compound.

The grounding member 130 of the plasma display device 100 may have a predetermined width, and may have a "L" cross-section in a plane perpendicular to a plane of the PDP 110, as illustrated in FIG. 2. The grounding member 130 may extend from the conductive film 122 of the optical filter 120 along a side surface of the PDP 110 toward the chassis 150, as further illustrated in FIG. 2. For example, one end of the grounding member 130 may be attached to a front surface of the conductive film 122, as illustrated in FIG. 2, and another end of the grounding member 130 may be attached to the front surface of the chassis 150. The grounding member 130 may be spaced apart from the PDP 110, as further illustrated in FIG. 2. The grounding member 130 and the conductive film 122 may be electrically connected to each other via a conductive adhesive 190, as illustrated in FIG. 2. The grounding member 130 may be formed of a conductive material, e.g., a metal.

It is noted, however, that other configurations of the grounding member 130, e.g., the grounding member 130 being connected to the case 160, are within the scope of the present invention. For example, if the chassis 150 is formed of a non-conductive material or has a structure that is difficult to connect to the grounding member 130, the grounding member 130 may be connected to a conductive portion of the case 160 to be grounded. Alternatively, the grounding member 130 may be directly connected to a grounding cable, e.g., a cable external to the plasma display device 100, without being connected to the chassis 150 or the case 160. Any number of grounding members 130 may be used to ground the conductive film 122. If a plurality of grounding members 130 is used in the plasma display device 100, the grounding members 130 may be configured in any suitable arrangement. For example, two grounding members 130 may be formed symmetrically in the plasma display device 100, as illustrated in FIG. 1.

The driving apparatus 140 of the plasma display device 100 may include a circuit device 141 on a circuit board 142, as illustrated in FIG. 2, and may drive the PDP 110. The circuit board 142 may be fixed on a rear surface of the chassis 150 via bosses 151 and bolts 152, as further illustrated in FIG. 2. Accordingly, the chassis 150 may be between the driving apparatus 140 and the PDP 110.

The case 160 of the plasma display device 100 may include a front case 161 and a rear case 162, as illustrated in FIG. 1. The front case 161 may have a frame structure, so a window may be formed in a center thereof, as further illustrated in FIG. 1. The rear case 162 may be disposed on a rear portion of the chassis 150, so the driving apparatus 140 may be between the rear case 162 and the chassis 150. The front case 161 may be attached to the rear case 162, so that the PDP 110 may be therebetween. The case 160 may be formed of any suitable material, e.g., plastic and/or metal, and may accommodate the PDP 110, the driving apparatus 140, and the chassis 150.

Hereinafter, a detailed structure and operation of the conductive film 122 of the optical filter 120 will be described with reference to FIGS. 2-4. FIG. 4 illustrates a diagram of a path of a visible ray that is incident on and reflected by the conductive film 122 of the optical filter 120 according to an embodiment of the present invention.

The conductive film 122 of the filter 120 may include the first and second conductive layers 122a and 122b in contact with each other. As illustrated in FIGS. 2-3, the first conductive layer 122a may be an outermost layer of the conductive film 122, and may include a first surface in contact with an exterior of the filter 120 and a second surface, i.e., a surface opposite the first surface, in contact with the second conductive layer 122b. The second conductive layer 122b may be between the first conductive layer 122a and the base film 121.

The first conductive layer 122a may have a thickness d1 and a refractive index n1. The second conductive layer 122b may have a thickness d2 and a refractive index n2. The thicknesses d1 and d2 of the first and second conductive layers 122a and 122b, respectively, and the refractive indices n1 and n2 of the first and second conductive layers 122a and 122b, respectively, may be adjusted with respect to each other in order to provide destructive interference of light reflected from the conductive film 122, as will be discussed in more detail below with reference to FIG. 4.

Each of the first and second conductive layers 122a and 122b may be formed of one or more of ITO, Ag, Au, Cu, and/or Al. For example, the first and second conductive layers 122a and 122b may be adjusted to have first and second thicknesses d1 and d2, and may be formed of indium-tin-oxide (ITO) and silver (Ag), respectively. In another example, both the first and second conductive layers 122a and 122b may be formed of Ag, and the thicknesses d1 and d2 may be adjusted to be different from each other. In yet another example, the first conductive layer 122a may be formed of Ag and the second conductive layer 122b may be formed of ITO.

Hereinafter, a path of a ray incident on the conductive film 122 will be described. A ray I illustrated in FIG. 4 may be a ray of an external light, i.e., light generated outside of the PDP 110, and may be incident on the conductive film 122 at an angle θ with respect to a normal to the conductive film 122.

More specifically, the ray I may be incident on the front surface of the first conductive layer 122a at an angle θ with respect to a normal to the first conductive layer 122a, and may be reflected and refracted at point A of the first conductive layer 122a. In particular, a first portion of the ray I may be reflected at point A from the first conductive layer 122a at an angle θ with respect to a normal to the first conductive layer 122a to form a reflected ray R1, i.e., an angle of 2θ is formed between the ray I and the ray R1. A second portion of the ray I may be refracted at point A, and may pass through the first conductive layer 122a to reach point B on an interface between the first and second conductive layers 122a and 122b.

The second portion of the ray I at point B may be reflected and refracted. More specifically, a third portion of the ray I may be reflected at point B from the interface between the first and second conductive layers 122a and 122b to form ray R2. Ray R2 may be transmitted through the first conductive layer 122a, and may exit through point D. A fourth portion of the ray I may be refracted at point B, and may pass through the second conductive layer 122b to reach point C on an interface between the second conductive layer 122b and the base film 121.

The fourth portion of the ray I at point C may be reflected and refracted. More specifically, a fifth portion of the ray I may be reflected at point C from the interface between the second conductive layer 122b and the base film 121 to form ray R3. Ray R3 may be transmitted through the first and second conductive layers 122a and 122b, and may exit through point E. A sixth portion of the ray I may be refracted at point C, and may pass through the base film 121 to reach the front surface of the PDP 110. Reflection and refraction of light at the front surface of the PDP 110 may be repeated.

An interference effect between the reflected rays R1 and R2 is as follows. A constructive interference may be generated when phases of the reflected rays R1 and R2 coincide with each other, and a destructive interference may be generated when the phases of the reflected rays R1 and R2 are opposite to each other. Accordingly, when constructive interference occurs between the reflected rays R1 and R2, a region between points A and D may be bright, and when destructive interference occurs between the reflected rays R1 and R2, the region between points A and D may be dark. As such, destructive interference of the rays R1 and R2 may be used to prevent or substantially minimize glaring in the region between points A and D, i.e., form dark regions. When glaring is minimized, visual display properties of the PDP 110 may be improved.

More specifically, the refractive indices n1 and n2 and thicknesses d1 and d2 of the first and second conductive layers 122a and 122b, respectively, may be adjusted to artificially generate destructive interference between points A and D. In particular, the materials and thicknesses of each of the first and second conductive layers 122a and 122b may be selected, so external light reflected from the conductive film 122, e.g., rays R1 and R2, may interfere with each other to form a dark region between points A and D. In other words, the conductive layers of the conductive film 122 may be physically selected and adjusted to eliminate light reflection via artificial destructive interference. The materials of the conductive film 122, i.e., refractive indices n1 and n2 of the first and second conductive layers 122a and 122b, and the thicknesses d1 and d2 of the first and second conductive layers 122a and 122b may be determined as follows.

First, a path difference corresponding to a destructive interference between the reflected rays R1 and R2 may be set according to Equation 1 below,

$$\delta = \frac{2\pi}{\lambda} n_1 d_1 \cos\theta \pm \psi \qquad \text{Equation 1}$$

where $\delta$ denotes the phase difference between the reflected rays R1 and R2 in radians, $\lambda$ denotes a central wavelength value of the visible ray I, n1 denotes a refractive index of the first conductive layer 122a, d1 denotes a thickness of the first conductive layer 122a, $\theta$ denotes an incident angle of the ray I, and $\psi$ may be a value accounting for a phase change caused by the reflection. In equation 1, the value of $\psi$ may be assumed to be 0, so reflectivity may be minimized.

Next, destructive interference may occur when Equations 2-3 below are satisfied simultaneously. In Equation 2 below, r denotes reflectivity, n0 denotes the refractive index of air, and n2 denotes a refractive index of the second conductive layer 122b.

$$r = \frac{(n_1^2 - n_0 n_2)^2}{(n_1^2 + n_0 n_2)^2} \qquad \text{Equation 2}$$

$$d_1 = \frac{\lambda}{4n_1} \qquad \text{Equation 3}$$

For minimized reflectivity from the conductive film 122, r may be set to equal 0 in equation 2 above, so equation 2 may be rewritten as equation 4 below.

$$n_1 = \sqrt{n_0 n_2} \qquad \text{Equation 4}$$

If the material of the second conductive layer 122b, i.e., a layer closer to the base film 121, is known, the value n1 for the first conductive layer 122a may be determined from Equation 4 above, so a material having the refractive index n1 may be used to form the first conductive layer 122a. Then, the determined value n1 and a central wavelength value of the visible ray ($\lambda$=550 nm) may be used in Equation 3 to determine the thickness d1 of the first conductive layer 122a. Accordingly, the first conductive layer 122a may be formed of a material having the refractive index n1 and the thickness d1, reflectivity r therefrom may be prevented or substantially minimized. In the above calculation, even though the central wavelength value of the visible ray was used to determine the thickness of the first conductive layer 122a, the thickness of the first conductive layer 122a may be also determined by substituting a wavelength of the visible ray of the required band.

In the above description, a method of determining the refractive index and the thickness of the first conductive layer 122a with respect to interference between the reflected rays R1 and R2 was considered. However, determination of an exact optimal refractive index and optimal thickness of the first conductive layer 122a may require consideration of interference between the reflected rays R1, R2, and R3. This is because substantially all of the interferences between the reflected rays should be considered in order to consider the interference effect exactly, since the reflections occur at interfaces between multiple layers. Here, in order to consider the interference between the reflected ray R3 and the reflected rays R1 and R2, the refractive index ns of the base film 121 may be used in Equations 1-4 above.

It is noted that even though the conductive film 122 is illustrated as having first and second conductive layers 122a and 122b, other configurations, e.g., one conductive layer, three conductive layers, or more conductive layers, are within the scope of the present invention. If three or more conductive layers are used to form the conductive film 122, each of the conductive layers may include one or more of ITO, Ag, Au, Cu, and Al, and may be stacked continuously or alternately. In addition, when three or more conductive layers are stacked, the number of conductive layers may be less than eleven layers. If three or more layers are used in the conductive film 122, Equations 1-4 above may be used in substantially the same way to determine material and thickness of each of the conductive layers.

The conductive layer 122 may be formed using a sputtering method, a vacuum deposition method, an ion plating method, a chemical vapor deposition (CVD) method, a physical vapor deposition (PVD) method, or a small particle coating method. In particular, when a transparent thin layer, e.g., the first conductive layer 122a or the second conductive layer 122b, is formed of ITO or Ag using the sputtering method, near-infrared light, as well as, electromagnetic waves may be blocked.

The optical filter 120 may further include one or more of a hard coating layer (not shown) and/or a selective light absorption layer on the conductive film 122. The hard coating layer may include a hard coating material coated on an outermost surface of the conductive film 122 in order to prevent or substantially minimize scratching on the conductive film 122. The selective light absorption layer may absorb light at a certain wavelength band, and may be formed between the base film 121 and the adhesive layer 126. If the hard coating layer is formed on the conductive film 122, a refractive index and a thickness of the hard coating layer may be considered in order to generate destructive interference in the optical filter 120.

Operation of the plasma display device 100 with the optical filter 120 is as follows. When a user operates the plasma display device 100, the driving apparatus 140 may be driven and a voltage may be applied to the PDP 110. When the voltage is applied to the PDP 110, an address discharge and a sustain discharge may occur to trigger emission of UV light when an excited energy level of the discharge gas is lowered. The UV light may excite the phosphor material of the phosphor layer in the discharge cells, so visible light may be emitted when an energy level of the excited phosphor material is lowered. The visible light emitted from the phosphor material may form images on a screen of the PDP 110.

The conductive film 122 of the optical filter 120 may be grounded to the chassis 150 through the grounding member 130, and thus, the optical filter 120 may absorb the electromagnetic waves and the near-infrared light emitted from the plasma display device 100. Thus, the optical filter 120 may block the electromagnetic waves and the near-infrared light. In addition, the conductive film 122 of the optical filter 120 may be formed by stacking layers having predetermined refractive indices and thicknesses, so external light incident thereon may generate destructive interference to prevent or substantially minimize reflection of external light from a front portion of the plasma display device 100, thereby improving display properties.

As described above, an optical filter 120 according to embodiments of the present invention may be advantageous in providing a conductive film 122 functioning both as an electromagnetic shield layer and as an external light anti-reflection layer. As such, a separate external light anti-reflection layer is not required. Therefore, fabrication costs and processes of the plasma display device 100 may be reduced, and performance of the plasma display device 100 may be improved.

Exemplary embodiments of the present invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

**Claims**

1. An optical filter, comprising:

   a base film; and
   first and second conductive layers stacked on the base film, the first conductive layer having a first thickness and a first refractive index, and the second conductive layer having a second thickness and a second refractive index, the first and second refractive indices and the first and second thicknesses being configured to generate a destructive interference of external light reflected from the first and second conductive layers.

2. The optical filter as claimed in claim 1, wherein the base film includes one or more of polyethersulphone (PES), polyacrylate (PAR), polyetherimide (PEI), polyethylenenapthalate (PEN), polyethyleneterepthalate (PET), polyphenylene sulfide (PPS), polyallylate, polyimide, polycarbonate (PC), cellulose triacetate (TAC), and/or cellulose acetate propionate (CAP).

3. The optical filter as claimed in claim 1 or 2, wherein the optical filter has a light transmittance of about 20% to about 90 % with respect to the external light, and a haze of about 1% to about 15%.

4. The optical filter as claimed in any one of the preceding claims, wherein each of the first and second thicknesses are related to the first and second refractive indices, respectively, according to the following relationship,

$$d = \frac{\lambda}{4n}$$

wherein d denotes a thickness of a conductive layer, n denotes a refractive index of the conductive layer, and $\lambda$ denotes a wavelength of the external light.

5. The optical filter as claimed in any one of the preceding claims, comprising three or more conductive layers stacked on the base film, the thickness and refractive index of each of the three or more layers being configured to generate a destructive interference of external light reflected from the conductive layers.

6. A plasma display device, comprising:

   a plasma display panel;
   an optical filter according to any one of the preceding claims on the plasma display panel; and
   a grounding member electrically connected to at least one of the conductive layers of the optical filter.

7. The plasma display device as claimed in claim 6, further comprising:

   a driving apparatus configured to drive the plasma display panel; and
   a chassis between the plasma display panel and the driving apparatus.

8. The plasma display device as claimed in claim 6 or 7, further comprising an adhesive layer between the optical filter and the plasma display panel.

9. The plasma display device as claimed in claim 8, wherein the adhesive layer includes one or more of an acrylic-based resin, a polyester resin, an epoxy resin, a urethane resin, and/or a pressure sensitive adhesive (PSA).

10. The plasma display device as claimed in claim 8 or 9, wherein the adhesive layer includes a pigment and/or a dye.

11. A method of forming an optical filter, comprising:

   forming a base film; and
   forming first and second conductive layers sequentially on the base film, wherein the first conductive layer has a first thickness and a first refractive index, and the second conductive layer has a second thickness and a second refractive index, the first and second refractive indices and the first and second thicknesses being selected to generate a destructive interference of external light reflected from the first and second conductive layers.

# FIG. 1

# FIG. 2

# FIG. 3

# FIG. 4